Europäisches Patentamt

European Patent Office

Office européen des brevets

(11) Veröffentlichungsnummer: **0 261 475**
**A2**

## (12) EUROPÄISCHE PATENTANMELDUNG

(21) Anmeldenummer: 87112886.4

(22) Anmeldetag: 03.09.87

(51) Int. Cl.⁴: **E05D 3/08 , H02B 1/08**

(30) Priorität: 25.09.86 DE 3632644

(43) Veröffentlichungstag der Anmeldung:
30.03.88 Patentblatt 88/13

(84) Benannte Vertragsstaaten:
AT BE CH DE FR GB IT LI NL

(71) Anmelder: **Siemens Aktiengesellschaft Berlin
und München**
**Wittelsbacherplatz 2**
**D-8000 München 2(DE)**

(72) Erfinder: **Ehm, Thomas, Dipl.-Ing. (FH)**
**Blenkerweg 32**
**D-4600 Dortmund 30(DE)**
Erfinder: **Seidel, Peter**
**Mittenwalderstrasse 256**
**D-8038 Gröbenzell(DE)**

(54) **Scharnier zur Befestigung von schwenkbar angeordneten elektrotechnischen Einrichtungen.**

(57) Dieses für eine einfache und schnelle Montage bzw. Demontage und für eine Automatenmontage vorgesehene Scharnier setzt flächig ausgestaltete und parallel zueinander verlaufende Scharnierbolzenaufnehmer (1) voraus. Zwischen diesen Scharnierbolzenaufnehmern (1) wird ein als Wellfeder oder Tellerfeder ausgebildeter Bereich (3,12) einer Scharnierfeder (4, 13) eingefügt. Diese Scharnierfeder (4, 13) ist bogenförmig über den Rand eines Scharnierbolzenaufnehmers (1) in sich zurückgebogen und derart mit Rastelementen (7,16) ausgebildet, daß diese in eine ringförmige Nut (8,17) eines in die fluchtenden Bohrungen der Scharnierbolzenaufnehmer (1) und des Wellfeder-bzw. Tellerfederbereichs (3,12) eingeführten Scharnierbolzens (2,11) einrasten.

FIG 1

## Scharnier zur Befestigung von schwenkbar angeordneten elektrotechnischen Einrichtungen

Die Erfindung bezieht sich auf ein Scharnier zur Befestigung von schwenkbar angeordneten elektrotechnischen Einrichtungen mit zwei zueinander parallel verlaufenden flächigen Scharnierbolzenaufnehmern und mit einer derart in jedem Scharnierbolzenaufnehmer angeordneten und der Stärke eines Scharnierbolzens entsprechenden Bohrung, daß sich der an einem Ende stufenförmig nach außen geformte Scharnierbolzen senkrecht zu den parallel verlaufenden Scharnierbolzenaufnehmerbereichen mit dem gegenüberliegenden Scharnierbolzenende beginnend, einführen läßt.

Es sind in der Elektrotechnik Scharniere zur Befestigung von schwenkbar angeordneten Teilen - z. B. Befestigung von elektronische Baugruppen aufnehmenden Schwenkrahmen in einem Gestell oder einer Wandhalterung - bekannt, bei denen ein zylindrischer, an einem Ende stufenförmig nach außen geformter Scharnierbolzen in Bohrungen von mit schwenkbar angeordneten Einrichtungen verbundenen Scharnierbolzenaufnehmern angeordnet ist und der Scharnierbolzen mittels einer auf das stufenförmig nach außen geformte, gegenüberliegende und mit einem entsprechenden Gewinde versehene Scharnierbolzenende aufgedrehte Gewindeschraube gehalten wird. Die beiden flächig ausgebildeten Scharnierbolzenaufnehmer weisen im Scharnierbereich annähernd gleiche Materialstärke auf und sind parallel zueinander angeordnet. Aus Stabilitätsgründen kann in die Scharnierbefestigung eine Federscheibe eingefügt werden. Diese Scharniere sind an schwer zugänglichen Befestigungsstellen z. B. einer Schwenkrahmen-Wandhalterbefestigung nur mit erheblichem zeitlichen Aufwand und Fachkönnen montierbar. Eine Automatenmontage dieses Scharniers ist aufgrund des komplizierten Montageablaufes sehr erschwert.

Der Erfindung liegt die Aufgabe zugrunde, ein Scharnier für schwenkbar angeordnete elektrotechnische Einrichtungen anzugeben, dessen Montage bzw. Demontage in dem Sinne einfach und schnell durchführbar ist, daß eine Automatenmontage und eine Montage bzw. Demontage an schwer zugänglichen Scharnierbefestigungsstellen ermöglicht wird.

Diese Aufgabe wird ausgehend von dem eingangs beschriebenen Scharnier durch die kennzeichnenden Merkmale des Anspruchs 1 gelöst.

Ein mit der Erfindung erzielbarer Vorteil liegt darin, daß dieses Scharnier eine die mechanische Stabilität des Scharniers steigernde günstige Anordnung einer Feder zwischen den Scharnierbolzenaufnehmern einschließt.

Die vorteilhaften Weiterbildungen der Erfindung gemäß den Ansprüchen 2 bis 5 und 9 basieren jeweils auf einem die Demontage des Scharniers weiter erleichternden zweiteilig ausgebildeten Scharnierbolzen. Der mit diesen Weiterbildungen erzielbare Vorteil liegt insbesondere in der Fixierung des Scharnierbolzenunterteils und der Scharnierbolzenfeder an einem der Scharnierbolzenaufnehmer nach der Demontage des Scharniers und damit der Unverlierbarkeit.

Weitere vorteilhafte Weiterbildungen der Erfindung gemäß den Ansprüchen 6, 7 und 10 sehen spezielle Ausgestaltungen der Scharnierfeder vor, mit denen neben der einfachen Montage des Scharniers eine sehr einfache und schnelle Demontage - durch Auseinanderdrücken der Federenden z. B. mittels Schraubendreher - ermöglicht wird.

Im folgenden werden zwei Ausführungsbeispiele der Erfindung anhand der Zeichnung näher erläutert. Dabei zeigen:

Fig. 1 ein Ausführungsbeispiel mit einem einteiligen Scharnierbolzen und einer Scharnierfeder zur schnellen Demontage und

Fig. 2 ein Ausführungsbeispiel mit einem zweiteiligen Scharnierbolzen und einem "unverlierbaren" Scharnierbolzenunterteil und Scharnierfeder.

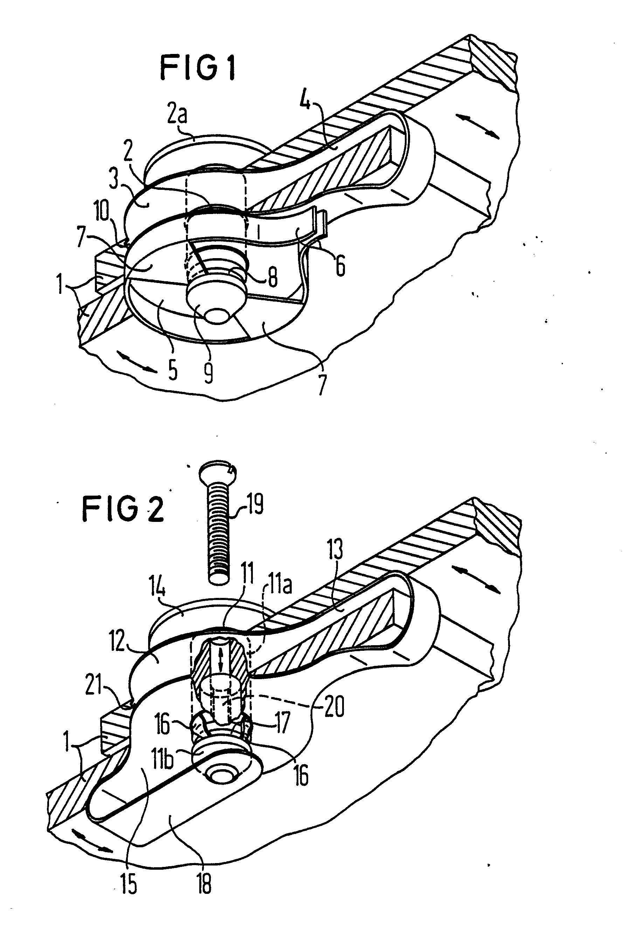

Fig. 1 zeigt zwei parallel angeordnete und annähernd konstante Stärke aufweisende Scharnierbolzenaufnehmer 1, die mit jeweils mit einer nicht dargestellten schwenkbar angeordneten Einrichtung - z. B. ein elektronische Baugruppen haltender Schwenkrahmen und eine entsprechende Wandhalterung - verbunden sind. Die Schwenkrichtung ist durch die beiden viertelkreisförmig und beidseitig mit Pfeilen versehenen Linien auf den Oberflächen der Scharnierbolzenaufnehmer 1 gekennzeichnet. Beide Scharnierbolzenaufnehmer 1 weisen eine Bohrung in derart auf, daß ein in diese Bohrungen eingeführter zylindrischer Scharnierbolzen 2 annähernd senkrecht zu den Scharnierbolzenaufnehmern 1 angeordnet ist. Der Scharnierbolzen 2 weist an einem Ende einen stufenförmig nach außen geformten, zylindrischen Scharnierbolzenbereich 2a auf, wobei die zum Scharnierbolzenaufnehmer 1 weisende Fläche dieses stufenförmig nach außen geformten Scharnierbolzenbereiches 2a bündig an einem der Scharnierbolzenaufnehmer 1 anliegt. Zwischen den beiden Scharnierbolzenaufnehmern 1 ist eine im Scharnierbolzenbereich 2 als zylindrischer Wellfederbereich 3 ausgebildete Scharnierfeder 4 eingefügt. Dieser Wellfederbereich 3 weist eine entsprechend große Bohrung für den Durchtritt des Scharnierbolzens 2 auf. Der Wellfederbereich 3 der Scharnierfeder 4 geht in einen in Richtung des Randes des dem stufenförmig nach außen geformten Scharnierbolzenbereichs 2a gegenüberliegenden Scharnierbolzenaufnehmers 1 sich erstreckenden streifenförmig ausgebildeten Scharnierfederbereich über. Dieser streifenförmig ausgebildete Bereich der Scharnierfeder 4 ist bogenförmig über den Rand des Scharnierbolzenaufnehmers 1 in sich in Richtung des Scharnierbolzens 2 zurückgebogen und geht in einen kreisförmigen, um den Scharnierbolzen 2 ausgebildeten und parallel zur Scharnierbolzenaufnahme 1 verlaufenden Scharnierfederbereich 6 über, wobei dessen Mitte eine Bohrung für den Durchtritt des Scharnierbolzens 2 aufweist. Der dem streifenförmig ausgebildeten Scharnierfederbereich gegenüberliegende Randbereich des kreisförmigen Scharnierfederbereichs 5 geht in einen weiteren, senkrecht zur Scharnierbolzenaufnahme 1 streifenförmig ausgestalteten und der kreisförmigen Randkontur des kreisförmigen Scharnierfederbereiches 5 folgenden Scharnierfederbereich 6 über. Die Enden dieses Scharnierfederbereiches 6 sind derart in sich zurückgebogen, daß die Endbereiche parallelliegend zueinander auslaufen. Zwischen der Befestigung und den zwei Enden dieses streifenförmig ausgestalteten Scharnierfederbereiches 6 ist jeweils eine senkrecht zur Scharnierbolzenrichtung verlaufende und jeweils zum Scharnierbolzen 2 gerichtete Rastfeder 7 angeordnet. Das jeweils zum Scharnierbolzen 2 zeigende und der Scharnierbolzenrundung angepaßte Ende der Rastfedern 7 liegt bündig in einer im Scharnierbolzen 2 in entsprechender Entfernung von der Scharnierbolzenaufnahme 1 angeordneten ringförmigen Nut 8 an. Das dem stufenförmig nach außen geformten Scharnierbolzenbereich 2a gegenüberliegende Scharnierbolzenende 9 ist kegelförmig ausgestaltet, um das Einführen des Scharnierbolzens 2 in die Scharnierbolzenaufnehmer 1 und die Scharnierfeder 4 zu erleichtern.

Die Montage des Scharniers beginnt mit dem Einfügen eines Scharnierbolzenaufnehmers 1 zwischen den Wellfederbereich 3 und den kreisförmig ausgebildeten Scharnierfederbereich 5 der Scharnierfeder 4. Um dieses Einfügen der Scharnierfeder 4 zu erleichtern, weist der dem streifenförmig ausgebildeten Scharnierfederbereich gegenüberliegende Rand des Wellfeder bereiches 3 eine annähernd parallel zur Scharnierbolzenaufnahme 1 verlaufende und über den kreisförmig ausgebildeten Scharnierfederbereich 5 hinausragende Führungslappen 10 auf. Anschließend wird die Bohrung des zweiten Scharnierbolzenaufnehmers 1 derart über die mit Scharnierfeder 4 versehene erste Scharnierbolzenaufnahme 1 gebracht, daß alle Bohrungen der Scharnierbolzenaufnehmer 1 und der Scharnierfeder 4 fluchtend übereinanderliegen und der Scharnierbolzen 2 bis zum stufenförmig nach außen geformten Scharnierfederbereich 3 eingeführt werden kann. Durch Druck auf den Scharnierbolzen 2 und Gegendruck auf den mit Rastelementen 7 versehenen Scharnierfederbereich 6 wird der Wellfederbereich 3 der Scharnierfeder 4 zusammengedrückt und somit ein Einrasten der Rastfedern 7 in die ringförmige Nut 8 des Scharnierbolzens 2 ermöglicht. Die Demontage des Scharniers erfolgt durch Auseinanderdrücken der beiden Enden der kreisförmig gebogenen Scharnierfederbereiche 6, wodurch die Rastfedern 7 aus der ringförmigen Nut 8 des Scharnierbolzens 2 gehoben werden und der Scharnierbolzen 2 entfernbar ist.

Fig. 2 zeigt ebenfalls die in gleicher Art angeordneten und mit Bohrungen versehenen Scharnierbolzenaufnehmer 1. Ebenfalls wie in Fig. 1 ist zwischen den Scharnierbolzenaufnehmern 1 ein mit einer Bohrung für den Durchtritt eines Scharnierbolzens 11 versehener Wellfederbereich 12 einer Scharnierfeder 13 eingefügt. Der Scharnierbolzen 11 weist ebenfalls an einem Ende einen stufenförmig nach außen geformten Scharnierbolzenbereich 14 auf. Der kreisförmig ausgebildete Wellfederbereich 12 geht wiederum in Richtung eines Scharnierbolzenaufnehmerrandes in einen streifenförmig ausgebildeten Scharnierfederbereich über. Dieser streifenförmig ausgebildete Scharnierfederbereich ist wiederum über den Rand des Scharnierbolzenaufnehmers 1 in sich in Richtung des Scharnierbolzens 11 zurückgebogen. In diesem Bereich des Scharnierbolzens 11 geht die Scharnierfeder 4 entsprechend Fig. 1 in einen kreisförmig um den Scharnierbolzen 11 aus gebildeten Scharnierfederbereich 15 über. Dieser kreisförmig ausgebildete Scharnierfederbereich 15 weist wiederum eine Bohrung zum Durchtritt des Scharnierbolzens 11 auf. Am Rande dieser Bohrung sind mehrere vom Rand der Bohrung in axialer Richtung beginnend, bogenförmig in Richtung Scharnierbolzen verlaufende und annähernd senkrecht zur Scharnierbolzenrichtung endende Rastfedern 16 ausgebildet. Die zum Scharnierbolzen 11 zeigenden Enden der Rastfedern 16 liegen bündig in einer in entsprechendem Abstand vom Scharnierbolzenaufnehmer 1 angeordneten ringförmigen Nut 17 des Scharnierbolzens 11 annähernd bündig an. Das dem stufenförmig nach außen geformte Scharnierbolzenende 14 gegenüberliegende Ende des Scharnierbolzens 11 ist kegelförmig ausgebildet. Dieses kegelförmige Scharnierbolzenende greift in eine eines streifenförmig weitergeführten und bogenförmig in sich in Richtung des Scharnierbolzens 11 zurückgebogenen Scharnierfederbereiches 18 entsprechend angeordnete Bohrung ein.

Der Scharnierbolzen 11 ist aus zwei Teilen, einem oberen Scharnierbolzenteil 11a und einem unteren Scharnierbolzenteil 11b gebildet. Der obere Scharnierbolzenteil 11a umfaßt den Scharnierbolzen 11 ab dem oberen Rand der ringförmigen Nut 16 einschließlich des stufenförmig nach außen geformten Scharnierbolzenbereiches 14 und weist in Achsenmitte eine Bohrung zum Durchtritt einer Gewindeschraube 19 auf. Der untere Scharnierbolzenteil 11b reicht vom oberen Rand der ringförmigen Nut 16 bis zum Ende des kegelförmigen Scharnierbolzenendes und weist in axialer Richtung eine dem Gewinde einer Gewindeschraube 19 entsprechende und am kegelförmigen Scharnierbolzenende gegenüberliegend beginnende Sackgewindebohrung 20 auf.

Vor der Montage des Scharniers wird die Gewindeschraube 19 in die Bohrung des oberen Scharnierbolzenteils 11a eingeführt und anschließend in die Gewindebohrung 20 des unteren Schar nierbolzenteils 11b eingedreht, wodurch der so montierte Scharnierbolzen 11 für eine weitere, z. B. Automatenmontage, vorbereitet ist. Die Montage des Scharniers wird - wie in Fig. 1 beschrieben - durchgeführt, jedoch wird der Gegendruck, mit dessen Hilfe das Einrasten der Rastfedern 16 in die ringförmige Nut 17 des Scharnierbolzens 11 ermöglicht wird, auf den kreisförmig um den Scharnierbolzen 11 ausgebildeten Scharnierfederbereich 15 ausgeübt. Ebenso ist an der Scharnierfeder 13 ein entsprechend der Fig. 1 geformter Führungslappen 21 ausgebildet, um das Einführen eines Scharnierbolzenaufnehmers 1 in die Scharnierfeder 13 zu erleichtern.

Bezugszeichenliste

    1 Scharnierbolzenaufnehmer
    2 Scharnierbolzen
    2a nach außen geformter Scharnierbolzenbereich
    3 zylindrischer Wellfederbereich
    4 Scharnierfeder
    5 kreisförmiger Scharnierfederbereich
    6 dem kreisförmigen Scharnierfederbereich folgender Scharnierfederbereich
    7 Rastfedern
    8 ringförmige Nut
    9 Scharnierbolzenende
    11 Scharnierbolzen
    11a oberer Scharnierbolzenteil
    11b unterer Scharnierbolzenteil
    12 Wellfederbereich
    13 Scharnierfeder
    14 nach außen geformter Scharnierbolzenbereich

    15 kreisförmig ausgebildeter Scharnierfederbereich
    16 Rastfedern
    17 ringförmige Nut
    18 zurückgebogener Scharnierfederbereich
    19 Gewindeschraube
    20 Sackgewindebohrung

**Ansprüche**

1. Scharnier zur Befestigung von schwenkbar angeordneten, elektrotechnischen Einrichtungen mit zwei zueinander parallel verlaufenden flächigen Scharnierbolzenaufnehmern und mit einer derart in jedem Scharnierbolzenaufnehmer angeordneten und der Stärke eines Scharnierbolzens entsprechenden Bohrung, daß sich der an einem Ende stufenförmig nach außen geformte Scharnierbolzen senkrecht zu den parallel verlaufenden Scharnierbolzenaufnehmerbereichen mit dem gegenüberliegenden Scharnierbolzenende beginnend, einführen läßt,

**dadurch gekennzeichnet,** daß zwischen die Scharnierbolzenaufnehmer (1) ein weitgehend parallel zu den Scharnierbolzenaufnehmern (1) verlaufender und mit einer einen zumindest der Scharnierbolzenstärke entsprechenden Durchmesser aufweisenden Bohrung ausgestatteter Teller-bzw. Wellfederbereich (3,12) einer Scharnierfeder (4,13) eingefügt ist und eine am Rand des Teller-bzw. Wellfederbereiches (3,12) ausgebildete in sich über einen Rand der Scharnierbolzenaufnahme (1) bogenförmig zurückgebogene Scharniergegenfeder (5,6,15) derart ausgestaltet ist, daß im Scharnierbolzenbereich der Scharniergegenfeder (5,6,15) angeordnete federnde Rastelemente (7,16) in eine hierfür im Scharnierbolzen (2,11) angeordnete ringförmige Nut (8,17) einrasten.

2. Scharnier nach Anspruch 1,
**dadurch gekennzeichnet,** daß der Scharnierbolzen (11) aus einem oberen, den stufenförmig nach außen geformten Bereich (3,14) einschließenden Scharnierbolzenteil (11a) und ab dem zum stufenförmig nach außen geformten Bereich (3,14) zeigenden Rand der ringförmigen Nut (17) aus einem unteren, mit einer in axiale Richtung verlaufenden Gewindebohrung (20) versehenen Scharnierbolzenteil (11b) gebildet wird und mittels einer in eine axiale Bohrung des oberen Scharnier bolzenteils (11a) eingeführten und in die Gewindebohrung (20) des unteren Scharnierbolzenteils (11b) eingedrehten Gewindeschraube (19) der Scharnierbolzen (11) gebildet wird.

3. Scharnier nach Anspruch 2,
**dadurch gekennzeichnet,** daß die Scharniergegenfeder (15) nach dem mit Rastelementen (16) versehenen Bereich weitergeführt und derart bogenförmig in sich zurückgebogen ist, daß bei eingeschobenem Scharnierbolzen (11) das Scharnierfederende (18) federnd und parallel zu den Scharnierbolzenaufnahmen (1) verlaufend am Endbereich des Scharnierbolzens (11) anliegt.

4. Scharnier nach Anspruch 2 oder 3, **dadurch gekennzeichnet,** daß das Ende der Scharniergegenfeder (15) als parallel zu den Scharnierbolzenaufnahmen (1) verlaufender und mit einer Bohrung zum Durchtritt des Scharnierbolzens (11) versehener Bereich (15) ausgestaltet ist und im Bereich des Randes der Bohrung die Rastelemente (16) derart ausgebildet sind, daß diese am Ende des Einschiebevorgangs des Scharnierbolzens (11) in die ringförmige Nut (17) des Scharnierbolzens (11) einrasten.

5. Scharnier nach einem der Ansprüche 2, 3 oder 4, **dadurch gekennzeichnet,** daß das Rastelement (16) durch wenigstens eine am Rand der Bohrung beginnende und in axialer Richtung bogenförmig in Richtung auf den Scharnierbolzen (11) verlaufend sowie annähernd senkrecht zur Scharnierbolzenrichtung endende Rastelemente (16) gebildet sind.

6. Scharnier nach Anspruch 1, **dadurch gekennzeichnet,** daß das Ende der Scharniergegenfeder (5) parallel zur Scharnierbolzenaufnahme (1) verläuft und mit einer Bohrung zum Durchtritt des Scharnierbolzens (2) versehen ist und an seitlich gegenüberliegenden Rändern dieses Scharniergegenfederendbereichs (5) zwei sich parallel zur Scharnierbolzenachse erstreckende Wandungen (6) ausgebildet sind sowie daß an diesen Wandungen (6) jeweils eine annähernd parallel zum Scharnierbolzenaufnehmer (1) verlaufendes Rastelement (7) derart angeordnet ist, daß diese in die ringfömige Nut (8) des Scharnierbolzens (2) einrasten.

7. Scharnier nach Anspruch 6, und 8, **dadurch gekennzeichnet,** daß die Rastelemente (7) als Rastfedern ausgebildet sind und an den zum Scharnierbolzen (2) zeigenden Rändern entsprechend der Scharnierbolzenform geformt sind.

8. Scharnier nach einem der vorhergehenden Ansprüche, **dadurch gekennzeichnet,** daß die Berührungsflächen des Scharniers im Sinne einer Erdpotentialschichtverbindung jeweils mit einer elektrisch leitenden Schicht versehen sind.

9. Verfahren zur Demontage des Scharniers nach den Ansprüchen 2, 3, 4 und 5, **dadurch gekennzeichnet,** daß die Gewindeschraube (19) gelöst und entfernt und anschließend das obere Scharnierbolzenteil (11a) abgenommen wird, wobei der untere Scharnierbolzenteil (11b) durch die Scharnierfeder (13) an einer der schwenkbaren Einrichtungen unverlierbar gehalten wird.

10. Verfahren zur Demontage des Scharniers nach den Ansprüchen 6 und 7, **dadurch gekennzeichnet,** daß die beiden Wandungen (6) auseinandergedrückt werden, wodurch die Rastfedern (7) aus der ringförmigen Nut (8) des Scharnierbolzens (2) gehoben werden und der Scharnierbolzen (2) entfernbar ist.

FIG 1

FIG 2